# EUROPÄISCHE PATENTSCHRIFT

(11) **EP 0 952 199 B1**
(45) Veröffentlichungstag und Bekanntmachung des Hinweises auf die Patenterteilung: **18.06.2003**
(21) Anmeldenummer: 99106849.5
(22) Anmeldetag: 07.04.1999
(51) Int. Cl.: C09J 133/08, C08L 33/08

(54) **Wässrige Dispersion als Haftklebstoff**
Aqueous dispersion to be used as adhesive
Dispersion aqueuse pour colle de contact

(30) Priorität: 24.04.1998 DE 19818394
(43) Veröffentlichungstag der Anmeldung: 27.10.1999
(73) Patentinhaber: BASF AKTIENGESELLSCHAFT, 67056 Ludwigshafen (DE)
(72) Erfinder: Gerst, Matthias Dr., 67433 Neustadt (DE); Auchter, Gerhard Dr., 67098 Bad Dürkheim (DE); Zettl, Alexander, 67063 Lugwigshafen (DE)

(56) Entgegenhaltungen:
- DE-A- 19 649 383
- US-A- 4 204 023

## Beschreibung

Die Erfindung betrifft die Verwendung von Haftklebstoffen, enthaltend eine wäßrige Polymerdispersion, dadurch gekennzeichnet, daß das Polymer aufgebaut ist aus

| | |
|---|---|
| 60 bis 95 Gew.-% | eines Gemisches aus mindestens einem C₄-Alkylacrylat und mindestens einen C₆- bis C₁₂ Alkylacrylat (Monomere a) |
| 5 bis 30 Gew.-% | ethylenisch ungesättigten Verbindungen mit einer Glasübergangstemperatur oberhalb 0°C, welche, abgesehen von der ethylenisch ungesättigten Gruppe, keine weiteren funktionellen Gruppen enthalten (Monomere b), |
| 0 bis 10 Gew.-% | ethylenisch ungesättigten Verbindungen mit mindestens einer Säure- oder Säureanhydridgruppe (Monomere c) |
| 0 bis 20 Gew.-% | weiteren ethylenisch ungesättigten Verbindungen (Monomere d), |

wobei die Gewichtsangaben auf das Polymer bezogen sind und die Polymerdispersion einen Emulgator, der zu mindestens 5 Gew.-% aus aromatischen C-Atomen besteht (kurz aromatischer Emulgator genannt) oder ein Emulgatorgemisch, welches zu mindestens 10 Gew.-% aus einem aromatischen Emulgator besteht, enthält, für Etiketten und Klebebänder.

Haftklebstoffe bilden einen bleibenden klebrigen Film, der schon unter geringem Druck bei Raumtemperatur an den verschiedensten Oberflächen haftet (eng.: pressure sensitive adhesives (PSA). Haftklebstoffe dienen zum Herstellen selbstklebender Erzeugnisse wie Selbstklebeetiketten, -bänder oder -folien. Derartige Produkte lassen sich sehr einfach anwenden und ermöglichen ein schnelles Arbeiten beim Verkleben. Es sind im Gegensatz zu Kontaktklebemassen keine Ablüftzeiten erforderlich. Auch eine sog. "offene Zeit", innerhalb der die Verklebung ausgeführt werden muß, existiert nicht. Die Qualität eines selbstklebenden Artikels hängt im wesentlichen davon ab, ob die innere Festigkeit (Kohäsion) und die Haftung des Klebstoffilms auf der zu beklebenden Oberfläche (Adhäsion) entsprechend der Anwendung aufeinander abgestimmt sind.

Insbesondere bei Haftklebstoffen für Folien, Klebebänder oder Etiketten muß die Kohäsion so groß sein, daß beim Stanzen und Schneiden kein Fadenziehen bzw. Kantenaustritt auftritt, da es sonst zu Verschmutzungen der Schneidewerkzeuge und Verklebung der Schnittflächen kommt. Gleichzeitig soll die Adhäsion auf einem hohen Niveau liegen, um eine gute Haftung auf dem zu beklebenden Substrat zu erreichen.

Adhäsion und Kohäsion sind im allgemeinen nicht unabhängig voneinander optimierbar. Gewünscht sind Maßnahmen, die entweder das Niveau beider Eigenschaften anheben oder zumindest eine Eigenschaft unverändert erhalten, während sich die jeweils andere verbessert.

Haftklebstoffe bzw. Klebstoffe auf Basis von Polyacrylatdispersionen, sind EP-A-625 557 oder PCT/EP 97/04102 bekannt. Derartige Copolymerisate zeigen noch nicht das gewünschte Adhäsions-, Kohäsionsniveau, bzw. Adhäsions-, Kohäsionsverhältnis. Aus der nicht veröffentlichten PCT/EP 97/06424 sind Kaschierklebstoffe auf Basis eines Copolymerisats mit C₄ und C₈ Alkylacrylaten bekannt.

Aufgabe der vorliegende Erfindung waren Haftklebestoffe mit verbesserter Adhäsion und/oder Kohäsion. Demgemäß wurden die oben definierte Verwendung gefunden.

Das Polymer der wäßrigen Polymerdispersion ist aus den eingangs definierten Monomeren a) bis d) aufgebaut.

Bei den Monomeren a) handelt es sich um ein Gemisch aus mindestens einem C₄-Alkylacrylat und mindestens einem C₆-C₁₂ Alkylacrylat.

Als C₄-Alkylacrylat bevorzugt ist n-Butylacrylat.

Als C₆- bis C₁₂-Alkylacrylat kommen z.B. n-Hexyl-, 2-Ethylhexyl-, Octyl, Decyl- oder Dodecylacrylat in Betracht.

Bevorzugt sind C₈-Alkylacrylate, insbesondere 2-Ethylhexylacrylat.

Der Anteil des C₄-Alkylacrylats beträgt vorzugsweise 15 bis 85 Gew.-%, besonders bevorzugt 20 bis 80 und ganz besonders bevorzugt 30 bis 70 Gew.-% und der Anteil der C₆-C₁₂ Alkylacrylate beträgt vorzugsweise 85 bis 15 Gew.-%, besonders bevorzugt 20 bis 80 und ganz besonders bevorzugt 30 bis 70 Gew.-%, wobei die Gewichtsangaben jeweils auf die Gesamtmenge der Monomeren a) bezogen sind.

Monomere a) haben eine Glasübergangstemperatur unterhalb 0°C.

Bei Monomeren b) handelt es sich um Monomere, welche neben der ethylenisch ungesättigten Gruppe keine weitere funktionelle Gruppe, d.h. keine Hydroxy-, Säure-, Säureanhydrid-, Nitro-, oder primäre, sekundäre oder tertiäre Aminogruppe oder Epoxygruppen enthalten. Monomere b), d.h. die Homopolymere der Monomeren b), haben eine Glasübergangstemperatur oberhalb 0°C, vorzugsweise oberhalb 15°C.

Die Glasübergangstemperatur des Polymeren läßt sich nach üblichen Methoden wie Differentialthermoanalyse oder Differential Scanning Calorimetrie (s. z.B. ASTM 3418/82, sog. "midpoint temperature") bestimmen.

Als Monomere b) zu nennen sind z.B. C₁-C₂₀-Alkyl(meth)acrylate, Vinylester von bis zu 20 C-Atome enthaltenden Carbonsäuren, Vinylaromaten mit bis zu 20 C-Atomen, ethylenisch ungesättigten Nitrile, Vinylhalogenide, sofern sie die oben angegebene Glasübergangstemperatur haben.

Geeignete (Meth)acrylsäurealkylester sind insbesondere Methylmethacrylat, Methylacrylat, n-Butylmethacrylat und tertiär-Butylacrylat.

Bevorzugt sind Methylacrylat, Methylmethacrylat und Butylmethacrylat.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.

Vinylhalogenide sind mit Chlor, Fluor oder Brom substituierte ethylenisch ungesättigte Verbindungen, bevorzugt Vinylchlorid und Vinylidenchlorid.

Bevorzugte Monomere (b) sind Methyl(meth)acrylate und Styrol.

Monomere c) sind z.B. ethylenisch ungesättigte Monomere mit Carbonsäuregruppen wie (Meth)acrylsäure, Maleinsäure, ethylenisch ungesättigte Säureanhydride oder Halbester, wie Maleinsäureanhydrid oder Maleinsäure- bzw. Fumarsäurehalbester. Bevorzugt sind Acrylsäure oder Methacrylsäure. Der Gehalt an Monomeren c) liegt vorzugsweise bei maximal 5 Gew.-%, bezogen auf das Polymer. Weitere Monomere d) können beliebiger Art sein. Bevorzugt genannt seien z.B. C₁- bis C₁₀-Hydroxyalkyl(meth)acrylate oder unter Monomere b) aufgeführte Monomere mit einer Glasübergangstemperatur unter 0°C.

Das erfindungsgemäße Polymerisat besteht vorzugsweise aus

| | |
|---|---|
| 65 bis 90 | Gew.-% Monomere a) |
| 5 bis 25 | Gew.-% Monomere b) |
| 0 bis 5 | Gew.-% Monomere c) |
| 0 bis 10 | Gew.-% Monomere d) |

und besonders bevorzugt aus

| | | |
|---|---|---|
| 70 bis 89,9 | Gew.-% | Monomere a) |
| 10 bis 20 | Gew.-% | Monomere b) |
| 0,1 bis 3 | Gew.-% | Monomere c) |
| 0 bis 10 | Gew.-% | Monomere d) |

Die Glasübergangstemperatur des Polymerisats läßt sich nach üblichen Methoden wie Differentialthermoanalyse oder Differential Scanning Calorimetrie (s. z.B. ASTM 3418/82, sog. "midpoint temperature") bestimmen.

Die Glasübergangstemperatur des Polymeren liegt bevorzugt zwischen - 60°C und + 10°C, besonders bevorzugt zwischen - 50°C und - 10°C und ganz besonders bevorzugt zwischen - 40°C und -20 °C.

Die Herstellung des Polymeren erfolgt vorzugsweise durch Emulsionspolymerisation, es handelt sich daher um ein Emulsionspolymerisat.

Bei der Emulsionspolymerisation werden üblicherweise ionische und/oder nichtionische Emulgatoren und/oder Schutzkolloide bzw. Stabilisatoren als grenzflächenaktive Verbindungen verwendet.

Im vorliegenden Fall wird erfindungsgemäß ein Emulgator, der zu mindestens 5 Gew.-% aus aromatischen C-Atomen besteht (kurz aromatischer Emulgator genannt) oder ein Emulgatorgemisch, welches mindestens 10 Gew.-% eines solchen aromatischen Emulgators, bezogen auf die gesamte Emulgatormenge, enthält, verwendet.

Vorzugsweise besteht der aromatische Emulgator zu mindestens 10 Gew.-%, besonders bevorzugt zu mindestens 20 Gew.-% aus aromatischen C-Atomen (d.h. C-Atome, die Bestandteil eines aromatischen Ringsystems sind.)

Der Anteil der aromatischen C-Atome liegt im allgemeinen unter 80 Gew.-%.

Vorzugsweise handelt es sich beim aromatischen Emulgator um einen ionischen Emulgator, insbesondere um einen Emulgator mit ein oder zwei, vorzugsweise zwei Sulfatgruppen.

Das Molgewicht des Emulgators liegt vorzugsweise unter 2000, insbesondere unter 1000 g/mol.

Besonders bevorzugt handelt es sich bei dem aromatischen Emulgator um eine ionische Verbindung mit einem Molekulargewicht unter 2000 g/mol, welche mindestens eine Sulfatgruppe oder Sulfonatgruppen, vorzugsweise zwei Sulfatgruppen oder Sulfonatgruppen mit zwei gegebenenfalls substituierte Phenylgruppen enthält.

Bevorzugt sind aromatische Emulgatoren mit ein oder zwei, vorzugsweise zwei Sulfonatgruppen.

Besonders bevorzugt handelt es sich um eine Verbindung der Formel 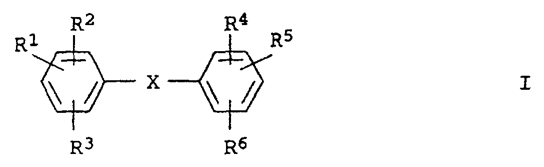 wobei X für O, S, CH_{2,} NH oder NR⁷, ein oder zwei der Reste R¹ bis R⁶ für eine Gruppe SO₃^{⊖} K^{⊕} und die übrigen Reste R¹ bis R⁶ für H oder eine C₁ - C₁₈ Alkylgruppe, R⁷ für eine C₁-C₁₈ Alkylgruppe K für ein Gegenkation stehen.

Vorzugsweise steht X für O. Vorzugsweise stehen ein oder zwei der Reste R¹ bis R⁶ für eine C₁-C₁₈ Alkylgruppe, insbesondere für eine C₆-C₁₈ Alkylgruppe und die übrigen Reste R¹ - R⁶ für H-Atome und die Sulfonatgruppen.

Bei K handelt es sich vorzugsweise um ein Gegenkation; ausgewählt aus z.B. den Alkalimetallen, Ammonium oder auch Wasserstoff. Besonders bevorzugt ist Natrium. Bei Verbindungen der Formel I handelt es sich üblicherweise auch um ein Gemisch von Verbindungen mit unterschiedlichen Substitutionsgrad (mono- oder dialkyliert) und unterschiedlichen Substitutionsposition der Substituienten (der Sulfonatgruppen und der ein oder zwei Alkylgruppen). Verbindungen mit der Formel I werden unter dem Warenzeichen Dowfax® 2A von Dow Chemical Company vertrieben.

Gegenüber der alleinigen Verwendung eines aromatischen Emulgators ist die Verwendung eines Gemisches aus einem aromatischen Emulgator und einem Emulgator ohne aromatischen C-Atome (nicht aromatischer Emulgator) bevorzugt.

Bei dem nichtaromatischen Emulgator handelt es sich bevorzugt um einen solchen der Formel

R⁸-O-(Z-O)ₙ - SO⁻ ₃ k⁺ II

wobei die Variablen folgende Bedeutung haben:
- R^{8:}: C₁-C₁₈ Alkyl, vorzugsweise C₁₀-C₁₆
- Z:: CH₂-CH₂ oder 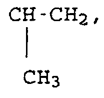 bevorzugt CH₂-CH₂
- n:: eine ganze Zahl von 1 bis 40, vorzugsweise von 2 bis 30
- K⁺:: ein Kation, z.B. H⁺ ein Alkalikation von z.B. Na, K oder Ammonium

Unter Verbindungen der Formel II sollen auch Verbindungen mit sowohl 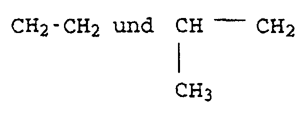 verstanden werden.

Verbindungen der Formel II werden z.B. unter der Bezeichnung Disponil® FES 77 von Henkel vertrieben.

Das Emulgatorgemisch besteht vorzugsweise aus

| | |
|---|---|
| 20 bis 95 Gew.-% | eines aromatischen Emulgators, insbesondere dem der Formel I und |
| 5 bis 80 Gew.-% | eines nicht-aromatischen Emulgators, insbesondere dem der Formel II |

Vorzugsweise beträgt der Anteil des aromatischen Emulgators 30 bis 95 Gew.-% und die des nicht aromatischen Emulgators 5 bis 70 Gew.-%, wobei die Gewichtsangaben auf die Gesamtmenge der Emulgatoren bezogen sind.

Der Emulgator bzw. das Emulgatorgemisch wird üblicherweise in Mengen von 0,1 bis 15 Gew.-%, vorzugsweise von 0,3 bis 5, besonders bevorzugt von 0,5 bis 3 Gew.-%, bezogen auf die zu polymerisierenden Monomeren verwendet. Die erhaltene Polymerdispersion enthält demgemäß die genannten Emulgatormengen.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind insbesondere sogenannte Reduktions-, Oxidations(Red-Ox)-Initiator Systeme.

Die Red-Ox-Initiator-Systeme bestehen aus mindestens einem meist anorganischem Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßrigen Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Weiterhin können bei der Polymerisation auch Regler eingesetzt werden, durch die die Molmasse verringert wird. Geeignet sind z.B. Verbindungen mit einer Thiolgruppe wie tert.-Butylmercaptan, Thioglykolsäureethylacrylester, Mercaptoethanol, Mercaptopropyltrimethoxysilan oder tert.-Dodecylmercaptan. Der Anteil dieser Regler kann insbesondere 0 bis 0,3 Gew.-%, bevorzugt 0,02 bis 0,3 Gew.-% bezogen auf das Polymerisat, betragen.

Die Emulsionspolymerisation erfolgt in der Regel bei 30 bis 100, vorzugsweise 50 bis 95°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew. -% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Die erhaltenen Polymere, bzw. Polymerdispersionen werden als Haftklebstoffe für Etiketten oder Klebebänder verwendet.

Die Polymeren werden vorzugsweise in Form ihrer wäßrigen Dispersion verwendet. Die wäßrigen Polymerdispersionen können ohne weitere Zusatzstoffe als Haftklebstoffe Verwendung finden.

Bei der Verwendung als Haftklebstoff kann den Polymerisaten bzw. den wäßrigen Dispersionen der Polymerisate ein Tackifier, d.h. ein klebrigmachendes Harz zugesetzt. Tackifier sind z.B. aus Adhäsive Age, Juli 1987, Seite 19-23 oder Polym.
Mater. Sci. Eng. 61 (1989), Seite 588-592 bekannt.

Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Tackifier können in einfacher weise den erfindungsgemäßen Polymerisaten, bevorzugt den wäßrigen Dispersionen der Polymerisate zugesetzt werden. Vorzugsweise liegen die Tackifier dabei selber in Form einer wäßrigen Dispersion vor.

Die Gewichtsmenge der Tackifier beträgt vorzugsweise 5 bis 100 Gew.-Teile. besonders bevorzugt 10 bis 50 Gew.-Teile. bezogen auf 100 Gew.-Teile Polymerisat. (fest/fest).

Neben Tackifiern können z.B. noch weitere Additive z.B. Verdikkungsmittel, Entschäumer, Weichmacher, Pigmente, Netzmittel oder Füllstoffe bei der Verwendung als Haftklebstoff Verwendung finden. Die erfindungsgemäßen Haftklebstoffe enthalten daher neben der wäßrigen Polymerdispersion gegebenenfalls noch Tackifier und/oder die vorstehenden Additive.

Die Haftklebstoff können durch übliche Methoden, z.B. durch Rollen, Rakeln, Streichen etc. auf Substrate, z.B. Papier oder Polymer-Folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metall aufgebracht werden. Das Wasser kann bevorzugt durch Trocknung bei 50 bis 150°C entfernt werden. Zur späteren Verwendung kann die mit Haftklebstoff beschichtete Seite der Substrate, z.B. der Etiketten, mit einem Releasepapier, z.B. mit einem silikonisierten Papier, abgedeckt werden.

Die Polymerisate zeigen bei der Verwendung als Klebstoffe eine verbesserte Adhäsion und Kohäsion, bzw. ein verbessertes Adhäsions - /Kohäsionsverhältnis.

### Beispiele

### A) Prüfmethoden

### a) Herstellung der Prüfstreifen

Die zu prüfende Dispersion wird mit einer Rakel in dünner Schicht auf ein silikonisiertes Papier aufgetragen und 3 min bei 90°C getrocknet. Die Spalthöhe der Rakel wird dabei so gewählt, daß sich für den getrockneten Klebstoffe eine Auftragsmenge von 19-21 g/m² ergibt. Auf den getrockneten Klebstoff wird eine handelsübliche OPP-Folie (30µ, Corona vorbehandelt) aufgelegt und mit einem Handroller fest angerollt. Das so hergestellte Folienlaminat wird in Streifen von 0,5 inch und von 2 cm Breite geschnitten. Diese Streifen werden vor der Prüfung mindestens 24h im Normklima gelagert.

### b) Prüfung der Scherfestigkeit als Maß für die Kohäsion (in Anlehnung an FINAT FTM 7)

Nach Abziehen des silikonisierten Papiers wird der Folienprüfstreifen so auf den Rand eines Prüfblechs aus Edelstahl verklebt, daß sich eine Verklebungsfläche von 0,5 inch x 0,5 inch ergibt. 20 Minuten nach dem Verkleben wird am überstehenden Ende des Folienstreifens ein 1000 g-Gewichts befestigt und das Prüfblech senkrecht aufgehängt. Umgebungsbedingungen: 23°C, 50 % relative Luftfeuchtigkeit. Als Scherfestigkeit wird die Zeit bis zum Versagen der Verklebung unter Einfluß des Gewichts als Mittelwert aus den Ergebnissen von drei Prüfkörpern in Minuten angegeben.

### c) Prüfung der Schälfestigkeit als Maß für die Adhäsion (in Anlehnung an FINAT FTM 1)

Nach Abziehen des silikonisierten Papiers wird ein 2 cm breiter Folien-Prüfstreifen auf ein Prüfblech aus Edelstahl verklebt. Umgebungsbedingungen: 23°C, 50 % relative Luftfeuchtigkeit. 1 Minute nach der Verklebung wird der Streifen mit Hilfe einer Zugprüfmaschine in einem Winkel von 180°C mit einer Geschwindigkeit von 300 mm/min abgezogen. Als Schälfestigkeit wird die dafür im Mittel erforderliche Kraft in N/2cm als Mittelwert aus den Ergebnissen von drei Prüfkörpern angegeben.

### B) Herstellung der Dispersionen:

In einem Polymerisationsreaktor werden 116 g Wasser und 0.05 Gewichtsprozent bezogen auf Monomere einer Styroldispersionen mit einem gewichtsmittleren Teilchendurchmesser von 30 nm auf 85°C unter Rühren erwärmt und dann unter weiterem Rühren die Teilmenge von 10 Gew.-% von Zulauf 2 zugegeben. Nach 5 min. werden Zulauf 1 und der Rest von Zulauf 2 gleichzeitig gestartet und mit konstanter Zulaufgeschwindigkeit in 180 min dosiert. Nach dem Ende des Zulaufs 1 wird noch 30 min bei 85°C gerührt. Bei dieser Temperatur werden unter Rühren zeitgleich 0.1 Gew.-%, bezogen auf Monomere einer 10 %igen Lösung von tert.-Butylhydroperoxid in Wasser sowie 0.16 Gew.-%, bezogen auf Monomere einer wäßrigen Lösung von Natriumdisulfit-Aceton Addukt zudosiert. Die Dipersion wurde sodann auf Raumtemperatur abgekühlt und mit einer 15%igen wäßrigen NaOH auf pH=7 neutralisiert. Der Feststoffgehalt der Dispersion ist auf 55-57% eingestellt.

Folgende Abkürzungen wurden verwendet:
- EA: Ethylacrylat
- HA: n = Hexylacrylat
- BA: n-Butylacrylat
- EHA: 2-Ethylhexylacrylat
- MMA: Methylmethacrylat
- AS: Acrylsäure
- tDMK: tert.-Dodecylmercaptan
- Disponil FES77: 30 gew.-%ige wäßrige Lösung des Natriumsalzes des Schwefelsäurehalbesters einer mit 30 Ethylenoxideinheiten ethoxiliertem C₁₂-C₁₄-Alkylrestes (s.Formel II)
- Dowfax 2A1: 45 gew.%ige wäßrige Lösung des Natriumsalzes des mit einem C₁₂-C₁₄-Alkylrest und mit zwei SO₃K-Resten derivatisierten Diphyenlethers (s. Formel I)
- Steinapol NLS: 45%ige wäßrige Lösung des Natriumsalzes von Laurylsulfat
- NaPS: Natriumperoxodisulfat

Zulauf 1 = Emulsionszulauf:
   242 g Wasser
   0.05 Gew.-% tDMK, bezogen auf Monomere
   Gesamtmenge an Monomere: 560 g
   Art der Monomere siehe Tabelle
   Art und Menge der Emulgatoren siehe Tabelle
Zulauf 2 = Initiatorzulauf:
   Menge NaPS (7%ig) siehe Tabelle

Zusammensetzung und Prüfergebnisse sind in Tabelle 1 aufgeführt.

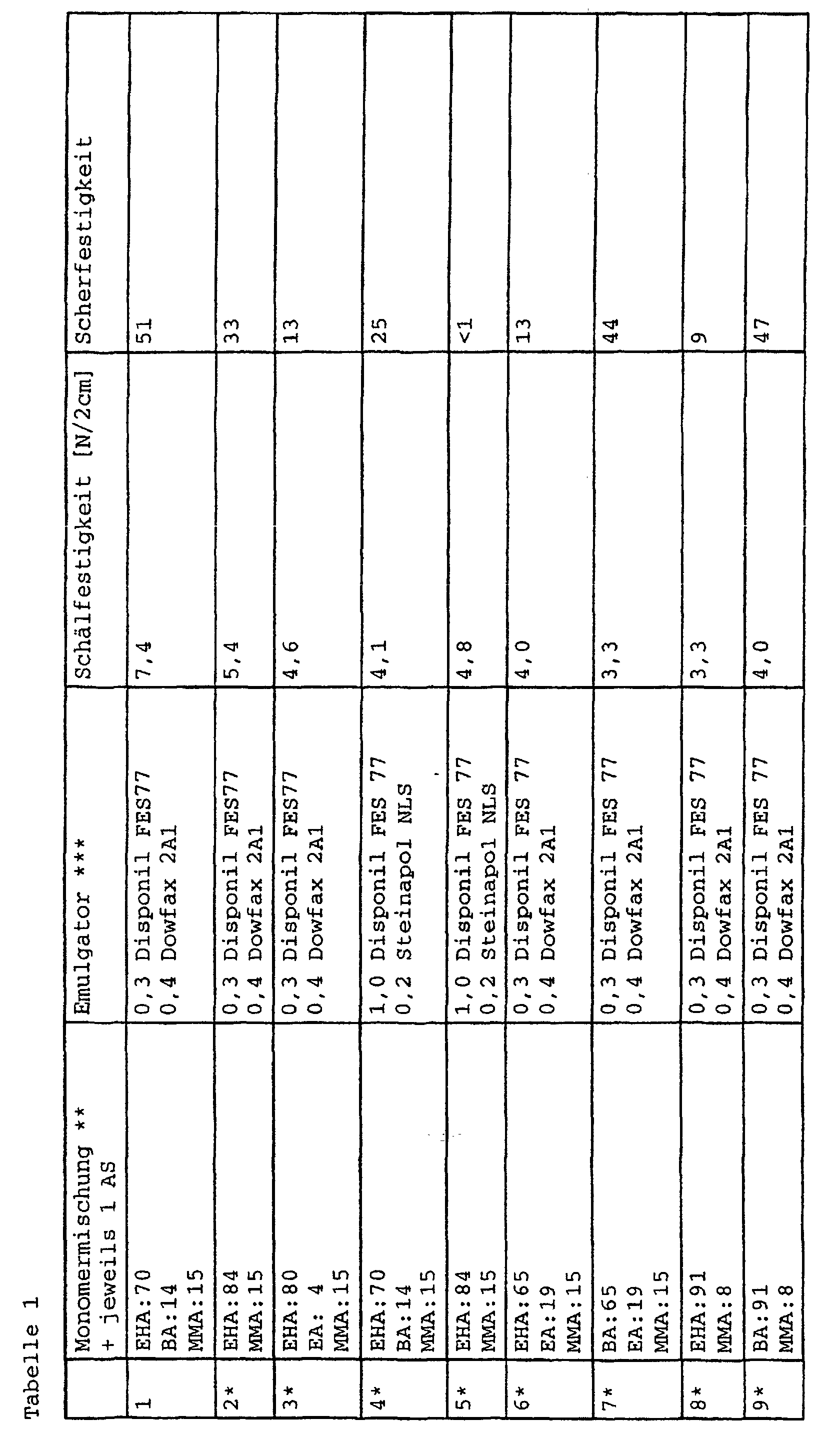

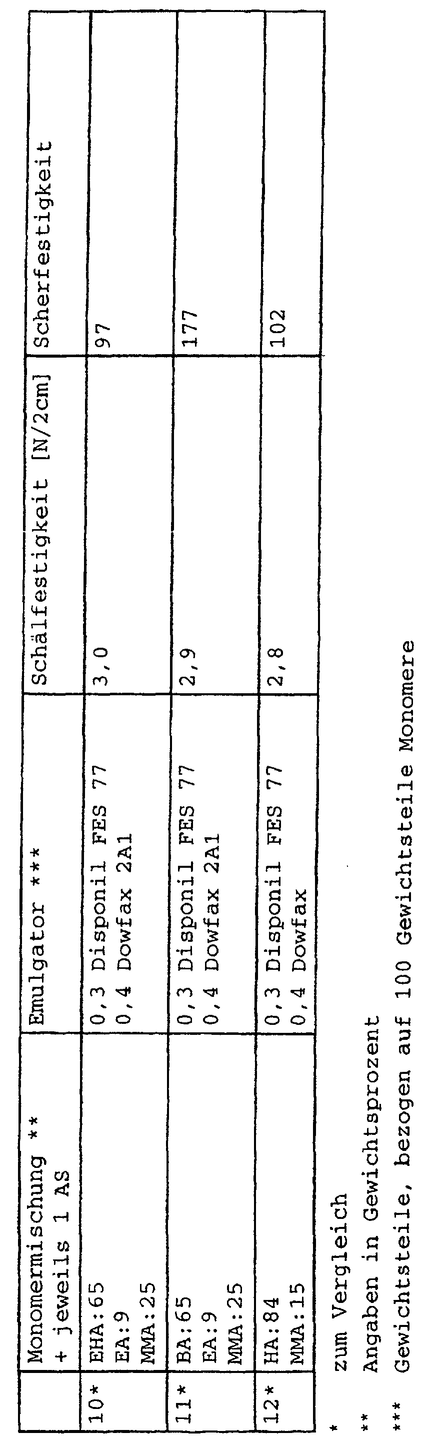

## Patentansprüche

1. Verwendung von Haftklebstoffen, enthaltend eine wäßrige Polymerdispersion, **dadurch gekennzeichnet, daß** das Polymer aufgebaut ist aus
| | |
|---|---|
| 60 bis 95 Gew.-% | eines Gemisches aus mindestens einem C₄-Alkylacrylat und mindestens einem C₆-bis C₁₂₋Alkylacrylat (Monomere a) |
| 5 bis 30 Gew.-% | ethylenisch ungesättigten Verbindungen mit einer Glasübergangstemperatur oberhalb 0°C, welche, abgesehen von der ethylenisch ungesättigten Gruppe, keine weiteren funktionellen Gruppen enthalten (Monomere b), |
| 0 bis 10 Gew.-% | ethylenisch ungesättigten Verbindungen mit mindestens einer Säure- oder Säureanhydridgruppe (Monomere c) |
| 0 bis 20 Gew.-% | weiteren ethylenisch ungesättigten Verbindungen (Monomere d), |
wobei die Gewichtsangaben auf das Polymer bezogen sind und die Polymerdispersion einen Emulgator, der zu mindestens 5 Gew.-% aus aromatischen C-Atomen besteht (kurz aromatischer Emulgator genannt) oder ein Emulgatorgemisch, welches zu mindestens 10 Gew.-% aus einem aromatischen Emulgator besteht, enthält, für Etiketten und Klebebänder.

2. Verwendung gemäß Anspruch 1, **dadurch gekennzeichnet, daß** Monomere a)
| | |
|---|---|
| 15 bis 85 Gew.-% | C₄-Alkylacrylate und |
| 15 bis 85 Gew.-% | C₆- bis C₁₂-Alkylacrylate enthalten |

3. Verwendung, gemäß Anspruch 1 oder 2, **dadurch gekennzeichnet, daß** es sich bei Monomeren a) um ein Gemisch aus n-Butylacrylat und 2-Ethylhexylacrylat handelt.

4. Verwendung gemäß einen der Ansprüche 1 bis 3, **dadurch gekennzeichnet, daß** es sich bei Monomeren b) um Methylmethacrylat oder Styrol handelt.

5. Verwendung gemäß einen der Ansprüche 1 bis 4, **dadurch gekennzeichnet, daß** das Polymer aus
| | |
|---|---|
| 70 bis 89,9 Gew.-% | Monomere a) |
| 10 bis 20 Gew.-% | Monomere b) |
| 0,1 bis 3 Gew.-% | Monomere c) und |
| 0 bis 10 Gew.-% | Monomere d) aufgebaut ist. |

6. Verwendung gemäß einen der Ansprüche 1 bis 5, **dadurch gekennzeichnet, daß** es sich bei dem aromatischen Emulgator um eine ionische Verbindung mit einem Molekulargewicht unter 1000 g/mol, welche mindestens eine Sulfatgruppe oder Sulfonatgruppe und zwei, gegebenenfalls substituierte Phenylgruppen enthält.

7. Verwendung gemäß Anspruch 6, **dadurch gekennzeichnet, daß** es sich bei dem aromatischen Emulgator um eine Verbindung der Formel 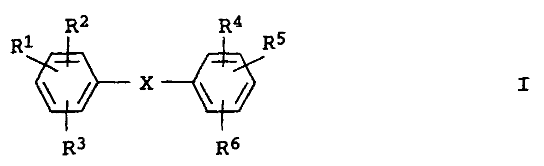 handelt, wobei X für O, S, CH₂, NH oder NR⁷, ein oder zwei der Reste R¹ bis R⁶ für eine Gruppe SO₃⁻ K⁺ und die übrigen Reste R¹ bis R⁶ für H oder eine C₁-C₁₈-Alkylgruppe, R⁷ für eine C₁-C₈-Alkylgruppe und K für eine Gegenkation stehen.

8. Verwendung gemäß einem der Ansprüche 1 bis 7, **dadurch gekennzeichnet, daß** es sich bei dem Emulgator um eine Emulgatorgemisch aus
| | |
|---|---|
| 20 bis 95 Gew.-% | eines aromatischen Emulgator und |
| 5 bis 80 Gew.-% | eines Sulfats der Formel |
R⁸-O-(Z-O)ₙ - SO⁻ ₃ k⁺ II
handelt, wobei die Variablen folgende Bedeutung haben:
R⁸: C₁-C₁₈-Alkyl
Z: CH₂-CH₂ oder 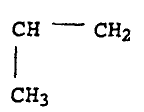
n: eine ganze Zahl von 1 bis 40
k: ein Kation

9. Mit einem Haftklebstoff gemäß einen der Ansprüche 1 bis 8 beschichtete Etiketten oder Klebebänder.

## Claims

1. The use of pressure-sensitive adhesives comprising an aqueous polymer dispersion wherein the polymer is composed of
| | |
|---|---|
| from 60 to 95% by weight | of a mixture comprising at least one C₄-alkyl acrylate and at least one C₆-C₁₂-alkyl acrylate (monomers a) |
| from 5 to 30% by weight | of ethylenically unsaturated compounds having a glass transition temperature of above 0°C and containing no functional groups other than the ethylenically unsaturated group (monomers b), |
| from 0 to 10% by weight | of ethylenically unsaturated compounds having at least one acid group or acid anhydride group (monomers c), |
| from 0 to 20% by weight | of further ethylenically unsaturated compounds (monomers d), |
the weight percentages being based on the polymer and the polymer dispersion comprising an emulsifier consisting to the extent of at least 5% by weight of aromatic carbon atoms (and called aromatic emulsifier for short) or an emulsifier mixture consisting to the extent of at least 10% by weight of an aromatic emulsifier for labels and adhesive tape.

2. The use as claimed in claim 1, wherein monomers a) comprise
| | | |
|---|---|---|
| from 15 to 85% | by weight of | C₄-alkylacrylate and |
| from 15 to 85% | by weight of | C₆- to C₁₂-alkyl acrylates. |

3. The use as claimed in claim 1 or 2, wherein monomers a) comprise a mixture of n-butyl acrylate and 2-ethylhexyl acrylate.

4. The use as claimed in any of claims 1 to 3, wherein monomers b) comprise methyl methacrylate or styrene.

5. The use as claimed in any of claims 1 to 4, wherein the polymer is composed of
| | | |
|---|---|---|
| from 70 to 89.9% | by weight of | monomers a) |
| from 10 to 20% | by weight of | monomers b) |
| from 0.1 to 3% | by weight of | monomers c) and |
| from 0 to 10% | by weight of | monomers d) |

6. The use as claimed in any of claims 1 to 5, wherein the aromatic emulsifier comprises an ionic compound having a molecular weight of less than 1000 g/mol and comprising at least one sulfate group or sulfonate group and two unsubstituted or substituted phenyl groups.

7. The use as claimed in claim 6, wherein the aromatic emulsifier comprises a compound of the formula 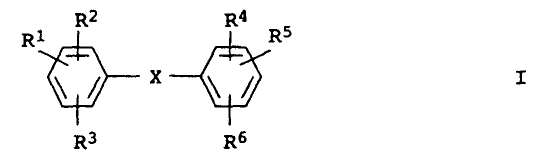 where X is O, S, CH₂, NH or NR⁷, one or two of R¹ to R⁶ are SO₃- K⁺ and the others of R¹ to R⁶ are H or C₁-C₁₈-alkyl, R⁷ is C₁-C₈-alkyl and K is a countercation.

8. The use as claimed in any of claims 1 to 7, wherein the emulsifier comprises an emulsifier mixture comprising
| | | |
|---|---|---|
| from 20 to 95% | by weight of | an aromatic emulsifier and |
| from 5 to 80% | by weight of | a sulfate of the formula |
R⁸-O-(Z-O)ₙ - SO₃⁻ K⁺ II
where
R⁸ is C₁-C₁₈-alkyl
Z is CH₂-CH₂ or 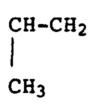
n is an integer from 1 to 40 and
k is a cation.

9. An adhesive tape or label coated with a pressure-sensitive adhesive as set forth in any of claims 1 to 8.

## Revendications

1. Utilisation de colles de contact, contenant une dispersion aqueuse de polymère, **caractérisée en ce que** le polymère est constitué
| | |
|---|---|
| de 60 à 95% en poids | d'un mélange d'au moins un acrylate d'alkyle en C₄ et d'au moins un acrylate d'alkyle en C₆-C₁₂ (monomères a), |
| de 5 à 30% en poids | de composés éthyléniquement insaturés ayant une température de transition vitreuse supérieure à 0°C, qui, en dehors du groupe éthyléniquement insaturé, ne contiennent aucun autre groupe fonctionnel (monomères b), |
| de 0 à 10% en poids | de composés éthyléniquement insaturés comportant au moins un groupe acide ou anhydride d'acide (monomères c), |
| de 0 à 20% en poids | d'autres composés éthyléniquement insaturés (monomères d), |
les indications en poids se rapportant au polymère, et **en ce que** la dispersion de polymère contient un agent émulsionnant, qui est constitué d'au moins 5% en poids d'atomes de C aromatiques (appelé d'une manière abrégée agent émulsionnant aromatique) ou d'un mélange d'agents émulsionnants, qui est constitué pour 10% en poids d'un agent émulsionnant aromatique, pour des étiquettes et des bandes adhésives.

2. Utilisation suivant la revendication 1, **caractérisée en ce que** les monomères a) contiennent
| | |
|---|---|
| 15 à 85% en poids | d'acrylate d'alkyle en C₄, et |
| 15 à 85% en poids | d'acrylate d'alkyle en C₆-C₁₂. |

3. Utilisation suivant l'une des revendications 1 et 2, **caractérisée en ce que**, pour ce qui concerne les monomères a), il s'agit d'un mélange d'acrylate de n-butyle et d'acrylate de 2-éthylhexyle.

4. Utilisation suivant l'une des revendications 1 à 3, **caractérisée en ce que**, pour ce qui concerne les monomères b), il s'agit de méthacrylate de méthyle ou de styrène.

5. Utilisation suivant l'une des revendications 1 à 4, **caractérisée en ce que** le polymère est constitué
| | |
|---|---|
| de 70 à 89,9% en poids de | monomères a), |
| de 10 à 20% en poids de | monomères b), |
| de 0,1 à 3% en poids de | monomères c), et |
| de 0 à 10% en poids de | monomères d). |

6. Utilisation suivant l'une des revendications 1 à 5, **caractérisée en ce que**, pour ce qui concerne l'agent émulsionnant aromatique, il s'agit d'un composé ionique ayant un poids moléculaire inférieur à 1000 g/mole, qui contient au moins un groupe sulfate ou sulfonate et deux groupes phényle, éventuellement substitués.

7. Utilisation suivant la revendication 6, **caractérisée en ce que**, pour ce qui concerne l'agent émulsionnant aromatique, il s'agit d'un composé de la formule : 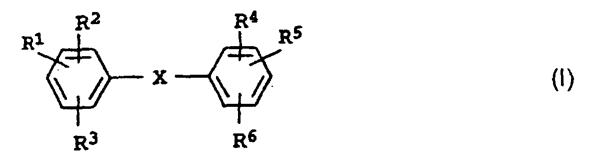 dans laquelle X représente O, S, CH₂, NH ou NR⁷, un ou deux des radicaux R¹ à R⁶ représentent un groupe SO₃⁻ K⁺ et les autres radicaux R¹ à R⁶ représentent H ou un groupe alkyle en C₁-C₁₈, R⁷ représente un groupe alkyle en C₁-C₈ et K est un contre-cation.

8. Utilisation suivant l'une des revendications 1 à 7, **caractérisée en ce que**, pour ce qui conceme l'agent émulsionnant, il s'agit d'un mélange
de 20 à 95% en poids d'un agent émulsionnant aromatique, et
de 5 à 80% en poids d'un sulfate de la formule :
R⁸-O-(Z-O)ₙ - SO⁻ ₃ k⁺ (II)
dans laquelle les variables ont les significations suivantes :
R⁸ : alkyle en C₁-C₁₈
Z : CH₂-CH₂ ou 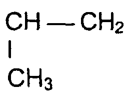
n : un nombre entier de 1 à 40
k : un cation.

9. Etiquettes ou bandes adhésives enduites d'une colle de contact suivant l'une des revendications 1 à 8.
